# EUROPEAN PATENT APPLICATION

(11) **EP 0 547 272 A1**
(43) Date of publication of application: **23.06.1993**
(21) Application number: 91311775.0
(22) Date of filing: 18.12.1991
(51) Int. Cl.: C08J 7/06, H01B 3/44, H01B 7/28

(54) **Plastic-covered transmission medium which is protected against oxidative cracking and methods of providing same**

(71) Applicant: AT&T Corp., New York, NY 10013-2412 (US)
(72) Inventor: Nelson, Edward Dennis, Stone Mountain, Georgia 30088 (US)
(74) Representative: Johnston, Kenneth Graham

(57) **Abstract**

End portions of insulated metallic conductors (20,20) which are exposed in pedestal closures (22,22), for example, are treated to cause a protective material comprising antioxidant material to be deposited on an outer surface of an insulation cover (26) of each. The antioxidant material is such that it protects the insulation cover from oxidative degradation under particular conditions of humidity and temperature for a substantial length of time. The antioxidant material may be applied by a container (32) and comprises a solution comprising a solvent and an antioxidant material which solution may be sprayed in a substantially labor-free manner within a pedestal closure.

## Description

### Technical Field

This invention relates to a plastic-covered transmission medium which is protected against oxidative cracking and methods of providing same.

### Background of the Invention

For some time, cables including metallic conductors insulated with polyethylene plastic material have been manufactured and used in the communications industry. The polyethylene material which typically has been extruded onto a moving metallic wire typically includes an antioxidant. The insulation material which is used commonly throughout the industry today is preferred for reasons relating to performance.

After years in the field, it has been found that cables experience a depletion in the antioxidant of the insulation composition. This has caused problems. See J. B. Howard "Stabilization Problems with Low Density Polyethylene Insulation" appearing in the proceedings of the 21st International Wire and Cable Symposium (1972) pp. 329-341. In some areas of the United States, particularly the Southwest, there have been instances where insulation failures such as cracking have occurred in pedestal closures due to oxidative degradation. Pedestal closures are above ground housings in which cables terminate and in which exposed insulated conductors of the cables are spliced to distribution cables, for example. The exposed insulated conductors and the connections and/or splices thereof within the closure commonly are referred to as wirework.

Insulation failures which have been found generally only in pedestal or aerial closures where an enclosing sheath system has been removed from the cable core to expose the conductors result in service problems in the affected closure. This in turn has contributed to rising maintenance costs for outside plant.

Observations of premature embrittlement and cracking of low density polyethylene insulation installed in the southwest area of the United States prior to 1971 have been documented. At least one organization has predicted that insulation embrittlement, which appears to be confined to aerial terminals and closures and above ground pedestals and terminals for buried cable, may spread to other geographical areas. Although improvements in insulation materials and stabilization systems have been made since 1971, there is concern over the rate of deterioration of early vintage polyethylene conductor insulation.

Several methods have been used to restore telephone plant in affected closures which have experienced cracked insulation. Of course, the deteriorated portions of the affected insulated conductors could be cut out and the terminals in the affected closure, for example, rewired. This is a very expensive and time consuming procedure.

Because of the expense in rewiring a pedestal closure, for example, a method was developed to fill insulation cracks and cover any bare wire in an affected closure. Such a procedure has been described in an article authored by J. W. Shea entitled "Treatment of Degraded PIC Insulation in Pedestal Closures Associated with Buried Plant" and appearing in the proceedings of the 21st International Wire and Cable Symposium (1972) beginning at page 70. An insulation spray comprising an aliphatic polyurethane developed by Shea has found increasing popularity in the field for the restoration of polyethylene conductor insulation. Its primary purpose is as a coating to restore insulation integrity where cracking has already begun.

Also of interest in this regard is U.S. patent 4,507,362 which issued on March 26, 1985 in the names of J. T. Chapin and R. A. Sabia. In it is disclosed a varnish suitable for spray coating on plastic insulated copper conductors. The varnish cures by reaction in air upon application to insulated conductors. The varnish comprises drying oil, typically tung oil and castor oil, phenolic resin, metallic catalysts and solvents.

The idea of restoring antioxidant to polyethylene insulation the stabilizer of which has been depleted after years in the field is not new. A restorative treatment involving a multicomponent system applied to the affected insulation has been described in the literature. See F. R. Wight "A Method For Restabilization of Antioxidant Depleted Low Density Polyethylene Insulation" published in the 1978 International Cable And Wire Symposium Proceedings beginning at page 112. One system reported by Wight comprised a solvent containing an antioxidant and a barrier constituent for solvating the insulation material to allow penetration of the antioxidant. Although the feasibility of this technique was demonstrated , the additive package was not optimized and no life projections were made.

Also, it has been found that the placement of highly stabilized sheets of polyethylene in pedestal closures heated to 90°C dramatically prolonged the life of the polyethylene insulation therein. In this technique, rather than relying on intimate contact between the insulation and an antioxidant reservoir, antioxidant migration to the insulation occurs through space in the pedestal closure. However, this technique has not enjoyed widespread acceptance.

F. R. Wight in his aforementioned article suggested the inclusion of an antioxidant material in priorly mentioned restorative sprays. Such a combination includes, for example, lacquer, antioxidant and solvent constituents. The composition may be sprayed onto wirework within a closure.

Although the techniques disclosed in the hereinbefore-identified documents are satisfactory, they have some shortcomings. They are directed to restoring already cracked insulation. Spraying of a material onto wirework inside the closure is somewhat time consuming and may require manual contact with the wirework to facilitate positioning of a spray can. Also, it has been found that a polymer or varnish-based material causes the exposed insulated conductors in a closure to stick together, causing problems for craftspersons who later enter the closure to perform various tasks. Should a craftsperson have to separate insulated conductors which are stuck together, unintended disconnections may occur.

If a method of retarding the cracking process and its migration into other geographical areas which overcomes the aforementioned shortcomings can be found, considerable savings would accrue. One possible approach to the problem of retarding the rate of polyethylene insulation cracking in the field is to introduce additional stabilizer into the polyethylene insulation to extend its lifetime. Obviously, this cannot be done retroactively for wires not yet cracked.

What seemingly is not found in the prior art and what is sought after is an arrangement for protecting insulation in the field which has not yet cracked without causing the insulated conductors to stick together. Such an arrangement will most surely result in less interruptions to service.

Also, desirably what is sought after are methods and devices which may be used in pedestal or aerial closures without the need to contact and move wirework therein in order to provide a treatment. The methods and devices sought after for use in protecting exposed insulated conductor end portions desirably should not be labor intensive.

What is needed is an inexpensive coating material which is easily applied and which dries rapidly. The coating material should have suitable electrical characteristics and be thermally stable at pedestal and aerial closure temperatures, have acceptable clarity so that color coding of the insulated conductors of a cable is not affected and have no adverse effects on hardware used in the closures.

### Summary of the Invention

The foregoing problems of the prior art have been overcome by the protected plastic-covered transmission medium of this invention. According to the invention there is provided a plastic-covered transmission medium which is protectant against oxidative cracking. As set out in Claim 1 and a method as set out in Claim 6.

The sprayed solvent solution also provides an antioxidant film on at least portions of internal surfaces of the closures. This is advantageous in that over time the film on the internal closure surfaces volatilizes, giving off antioxidant material which provides additional protection to the insulation.

The device and methods of this invention are advantageous from several standpoints. The method of application to insulated conductors is relatively simple. Also, it is not labor intensive. Wirework within a closure need not be moved to cause the solvent mixture to be applied to outer surfaces of the insulated conductors. This is an important advantage because any movement of the wirework in a pedestal closure may cause service failures. Also, a preferred antioxidant drys as a clear film which makes it difficult to see and therefore is aesthetically attractive. Also, such an antioxidant material does not interfere with color coding of the insulated conductors.

### Brief Description of the Drawing

FIG. 1 is a perspective view of plastic-covered transmission medium an outer surface of which has been provided with a protective antioxidant material; and
FIG. 2 is a perspective view of a pedestal closure into which cables to be terminated extend and in which a solvent mixture is caused to be sprayed to cause a film of antioxidant material to be residual on outer surfaces of plastic-covered transmission media therein.

### Detailed Description

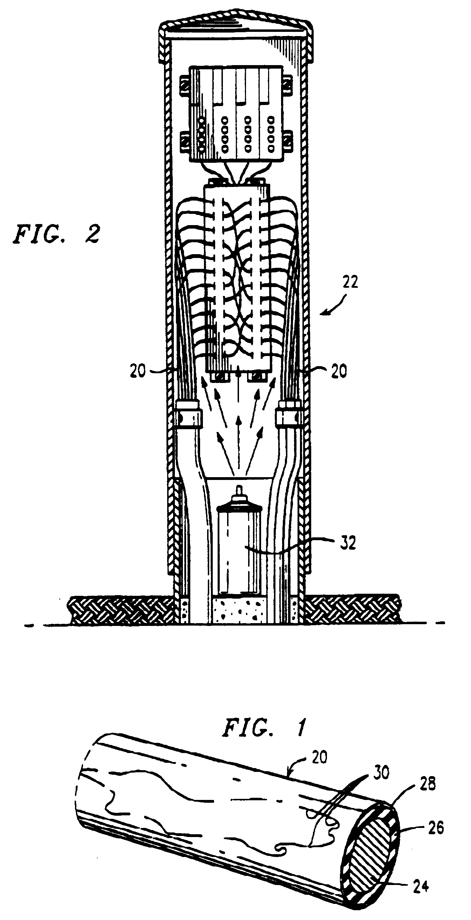

Referring now to FIG. 1, there is shown a perspective view of a portion of an insulated metallic conductor 20 which one may expect to find exposed in a pedestal closure 22 (see FIG. 2). Within the pedestal closure 22, cables 23-23 extending thereinto and therefrom are terminated. In order to terminate the cables, sheath systems thereof are removed, thereby exposing insulated metallic conductors 20-20 therein. It is not uncommon for hundreds of such insulated metallic conductors to be spliced or connected within a pedestal closure. As will be recalled, the exposed insulated conductors and the connections and/or splices thereof within the closure commonly are referred to as wirework.

Again referring to FIG. 1, it can be seen that the insulated metallic conductor 20 includes a centrally disposed metallic conductor 24 which is longitudinally extending and which is enclosed by a suitable plastic insulation cover 26. Such a plastic cover may be a high density polyethylene, for example. It should be noted that although the invention is described in terms of an insulated metallic conductor, the invention has utility with respect to any plastic-covered transmission medium such as plastic-enclosed optical fiber (not shown).

In order to protect the insulated metallic conductor exposed within the closure from plastic degradation caused by the environment, an outer surface 28 of the plastic insulation cover is provided with a protective film 30. It should be observed from FIG. 1 that the film 30 does not necessarily cover the entire outer surface area of the insulation cover 26.

The protective film 30 comprises an antioxidant material. In a preferred embodiment the antioxidant comprises 2,2-bis[[3-[3,5-bis(1-1-Dimethyethyl)-4-ss]-1-oxopropoxy]methyl]-1,3-propanediyl 3,5-bis(1,1-dimethyl-ethyl)-4-hydroxybenzenepropanoate. This is the Chemical Abstracts service name for the preferred antioxidant material whereas the chemical name for this material used in the Code of Federal Regulations is tetrakis [methylene(3,5-di-tert-butyl-4-hydroxyhydroncinnamate] methane having the empirical formula C₇₃H₁₀₈O₁₂. Such a material is available commercially, for example, from the Ciba-Geigy Company under the description Irganox 1010 antioxidant and thermal stabilizer. Product literature on the Irganox 1010 thermal stabilizer discloses that the material is covered by U.S. patents 3,285,855 and 3,644,482. This material is a high molecular weight, non-discoloring, non-staining multifunctional antioxidant. It comprises a symmetrical molecule which includes four sterically hindered phenolic hydroxyl groups which provide antioxidant activity.

In order to provide the film 30 on the outer surface layer of the insulation cover 26, a liquid comprising a solution of the antioxidant is provided in a container or cannister 32 (see FIG. 2) which is positioned in a pedestal closure. The container 32 is such that it includes provisions for spraying the solution. Further, the container may be such that once an activating button thereof is depressed, the contents of the container are emptied as a misting spray. This is a familiar arrangement in insect bombs used to disinfect homes, for example.

In a preferred embodiment, the liquid in the container 32 comprises a solvent and an antioxidant material such as the Irganox 1010 thermal stabilizer described hereinbefore. The solvent for the Irganox 1010 thermal stabilizer may be trichloroethane or methylene chloride, for example. In the preferred embodiment, the liquid solution in the container comprises 10 grams of Irganox 1010 antioxidant and 100 cubic centimeters of trichloroethane solvent. Although 10 grams of the antioxidant material are preferred, a range as low as 1 gram and as high as 40 grams of the antioxidant material may be used. If more than 40 grams are used, full solubility may not be achieved. Also, with more than 40 grams of antioxidant per 100 cubic centimeters of solvent, a nozzle of the container 32 could become clogged. Further, excess antioxidant may become unsightly. Moreover, in excess of 40 grams per 100 cubic centimeters of solvent is wasteful in that it is not required to provide a suitably protective film for the plastic insulation covers of the transmission media.

Of course, it should be understood that for other antioxidants, solvents other than those mentioned hereinabove may be used. For example, for Irganox 1076 antioxidant and thermal stabilizer, a hexane solvent may be used. Irganox 1076 thermal antioxidant is a commercially available antioxidant having a Chemical Abstracts name of octadecyl 3,5-bis (1,1-dimethylethyl)-4- hydroxybenzene propanoate and empirical formula C₃₅H₆₂O₃. The chemical name used in the Code of Federal Regulations is octadecyl 3,5-di- tert-butyl-4-hydroxyhyrocinnamate. It is a high molecular weight, sterically hindered phenol which inhibits oxidation and thermal degradation of many organic and polymeric materials.

The above device and methods are advantageous from several standpoints. After the container 32 has been activated inside a pedestal closure, the sprayed solution deposits on the surface 28 of each insulation cover and the solvent evaporates leaving a residue comprising the antioxidant material. As a result, craftsperson contact with the solvent system is kept to a minimum. Further, there is no need for a craftsperson to rearrange the wirework inside the pedestal closure to insure coverage with a spray. Of course, the solvent solution may be applied carefully with any suitable spray device. Advantageously, the antioxidant material deposits about the periphery of the wirework in the closure including undersides thereof without the need to disturb the insulated conductors. Of course, as mentioned hereinbefore, it should be realized that the deposited antioxidant film may not be continuous and therefore not cover the entire outer surface area of each insulation cover. However, it has been found that at least a substantial portion of the outer surface area of the insulation cover 28 of each insulated conductor is so covered. Further, antioxidant material from those covered portions of the insulation may migrate to the uncovered portions.

Importantly, the arrangement of this invention does not cause the wirework to become stuck together. As a result, there is minimal disturbance to other conductors when a craftsperson enters to make a connection to a particular conductor.

The sprayed solution also results in a residue on internal surfaces of the closure. As a result, antioxidant material therefrom may migrate to the insulated conductors thereby enhancing the oxidative protection for the insulation covers of the insulated conductors.

It is to be understood that the above-described arrangements are simply illustrative of the invention. Other arrangements may be devised by those skilled in the art which will embody the principles of the invention and fall within the spirit and scope thereof.

## Claims

1. An enclosed transmission medium which is protected against oxidative cracking, said enclosed transmission medium comprising: a transmission medium and a plastic material which encloses laterally said transmission medium and which comprises a polymeric material, said enclosed transmission medium being characterized by:
a protective antioxidant material which is disposed on an outer surface of said plastic material with sufficient protective material being so disposed to protect said plastic material from oxidative cracking for a substantial length of time.

2. The enclosed transmission medium of claim 1 said transmission medium comprises a metallic conductor, and wherein
an insulation cover which is disposed about said metallic and which comprises a polymeric material, and wherein a protective antixoidant material which comprises an antioxidant material a sufficient amount of which is disposed on an outer surface of said insulation cover protects said insulation cover from oxidative cracking for a substantial length of time.

3. The insulated conductor of claim 2, wherein said antioxidant material comprises 2,2-bis[[3-[3,5-bis(1-1-Dimethyethyl)-4-hyphoxyphenyl]-1-oxopropoxy]methyl]-1,3-propanediyl 3,5-bis(1,1-dimethyl-ethyl)-4-hydroxybenzenepropanoate.

4. The insulated conductor of claim 1, wherein said antioxidant material comprises octadecyl 3,5-bis(1,1-dimethylethyl)-4-hydroxybenzene propanoate.

5. A method of protecting plastic material of plastic-covered transmission media to prevent oxidative cracking of the plastic material, said method being characterized by the steps of:
providing a homogeneous solution comprising a solvent and an antioxidant material; and
causing the solution to be sprayed in the vicinity of the plastic covered transmission medium to cause the antioxidant material to deposit on an outer surface of the plastic material thereof, the solvent evaporating as the solution is sprayed and drying on the plastic material to leave sufficient residue of antioxidant on the outer surface of the plastic material to retard oxidative cracking of the plastic material for a substantial length of time.

6. The method of claim 6, wherein the antioxidant material comprises 2,2-bis[[3-[3,5-bis(1-1-Dimethyethyl)-4-hyphoxyphenyl]-1-oxopropoxy]methyl]-1,3-propanediyl 3,5-bis(1,1-dimethyl-ethyl)-4-hydroxybenzenepropanoate.

7. The method of claim 5, wherein said method also includes the step of positioning a container in which the solution is disposed within a pedestal closure into which the transmission media extend and said step of causing said solution to be sprayed results in antioxidant being deposited on internal surfaces of the pedestal.

8. A device for providing protection against oxidative degradation of a plastic material of plastic-covered transmission media, said device including: a container for holding a liquid material and including means for spraying the liquid material to provide a spray thereof, said device being characterized by
a solvent solution which is disposed in said container and which is capable of being sprayed, said solvent solution including a solvent and an antioxidant material.

9. The device of claim 8, wherein said antioxidant material comprises 2,2-bis [[3-[3,5-bis(1,1-Dimethyethyl)-4-hydroxyphenyl]-1-oxopropoxy]methyl]- 1,3-propanodiyl 3,5-bis(1,1 dimethyethyl]-4 hydroxypbenzenepropanoate.

10. A closure, which includes: a housing, and transmission media disposed within said housing, each of said transmission media including: a transmission medium and; a plastic material which encloses laterally said transmission medium and which comprises a polymeric material; each of said transmission medium being characterized by
a protective antioxidant material which is disposed on an outer surface of said plastic material, said protective material being present in a sufficient amount to protect said plastic material from oxidative cracking for a substantial length of time.
